# EUROPEAN PATENT SPECIFICATION

(11) **EP 3 874 166 B1**
(45) Date of publication and mention of the grant of the patent: **05.10.2022**
(21) Application number: 20757916.0
(22) Date of filing: 21.08.2020
(51) Int. Cl.: F03D 17/00, F03D 7/04

(54) **DETECTION OF HEAVY RAIN OR HAIL ON A BLADE OF WIND TURBINE**
ERFASSUNG VON STARKEM REGEN ODER HAGEL AUF EINEM ROTORBLATT EINER WINDTURBINE
DÉTECTION DE PLUIE FORTE OU DE GRÊLE SUR UNE PALE D'ÉOLIENNE

(30) Priority: 23.08.2019 EP 19193364
(43) Date of publication of application: 08.09.2021
(60) Divisional application: 22150923.5
(73) Proprietor: Ventus Engineering GmbH, 1110 Vienna (AT)
(72) Inventor: LÜBKER, Poul Anker Skaarup, 6340 Baar (CH); MINGALIEV, Shavkat, 1010 Wien (AT); BEYREM, Khalfaoui, 1030 Wien (AT); IQBAL, Hassan, 2320 Schwechat (AT); TENCALIEC, Patricia, 1220 Wien (AT); TOLRON, Xavier, 1150 Wien (AT)
(74) Representative: Patrade A/S
(86) International application number: PCT/EP2020/073542
(87) International publication number: WO 2021/037751

(56) References cited:
- EP-A1- 2 565 444
- US-A1- 2003 165 379
- US-A1- 2009 039 650
- US-A1- 2014 246 857
- US-A1- 2014 260 634

## Description

### BACKGROUND OF THE INVENTION

### Field of the Invention

The present invention relates to a method of and system for detecting heavy rain or hail on a blade on a wind turbine generator.

### Description of Prior Art

The operation of wind turbine generators benefits from information concerning operational conditions. To this end a plethora of auxiliary diagnostics with a specific purpose has been developed and implemented.

For example, weather forecasts based on meteorological data are refined with a specific purpose of predicting weather conditions.

In another example, meteorological equipment, such as LiDARs or radars, are installed at costs and with complexity to observe weather conditions facing a wind turbine generator.

Precipitation, including heavy precipitation, may be detected or identified by disdrometers; and/or in combination with modelling of meteorological data provided by say radar/LiDAR installations.

Some efforts have been made to assess operating conditions experienced by a wind turbine. The efforts include the following examples.

EP2565444 discloses a time-domain system blade identification method for monitoring and, in particular, for detecting changes in the rotor blade properties from the measured vibrations, a temperature of one or more rotor blades being recorded.

EP2565444 is silent about identification of the conditions that the rotor blade experience during operation.

US2014246857 discloses a setup where noise monitoring detects unusually loud noises as single events e.g., when a large noise occurs simultaneously in multiple wind turbines in a park and are identified at the same time, the noise is then likely to be an external event such as hail or lightning. US2014246857 further suggests that the wind turbine is stopped and serviced by personnel.

US2003165379 discloses a system as a before mentioned disdrometer type to determine a threshold impact on a blade of the number of particles including hails and raindrops, or precipitation, and their impulse.

US2014260634 discloses a system of acoustic and accelerometers (gravitational direction) directed towards comparing the sensory date collected amongst several blades to measure cyclical stress loads.

US2009039650 discloses a method of classifying events like icing, fouling or cracks by combining signals such as evaluating signals obtained during a summer period in which icing can be excluded. US200903650 is silent about actual signals and signal patterns.

### SUMMARY OF THE INVENTION

It is a purpose to reduce complexity of obtaining operational conditions relevant to wind turbine generator operation. It is an objective to improve operation of a wind turbine generator.

It is a purpose to increase the lifetime of a wind turbine generator. It is a further purpose to reduce the need for service over the lifetime of the wind turbine generator.

For example, it is an objective to reduce erosion of a wind turbine blade, say a leading edge of a wind turbine blade.

### Description

An objective is achieved by a method of detecting heavy rain or hail on a blade on a wind turbine generator, comprising the following acts:
- measuring sensory input from the wind turbine generator;
- identifying signatures of heavy rain or hail on the blade from the sensory input,
wherein the act of measuring is performed by means of accelerometers as vibration sensors.

Abnormal conditions will be understood and specified with examples. Likewise, the act of identifying signatures will be understood and specified with examples.

A normal condition may be understood as "all things equal" and during normal or acceptable conditions. A normal condition may also be under specified conditions, such as recognized unusual conditions as an example.

An abnormal condition may be considered an anomaly.

Sensory input includes a response in a sensory organ or unit when it receives stimuli, quantitative input or measurements.

A condition may be for a specific blade, a specific rotor with a set of specific blades, a specific wind turbine with a specific rotor with a set of specific blades. A condition may be any such conditions or situations occurring during specific circumstances.

As such, a system or a wind turbine blade may operate under conditions where "all things are equal" or the same until an unusual event, a non-normal or abnormal event or condition emerges.

According to a non-claimed embodiment, the detection may be by "listening" and sensing for heavy rain and other flaws on wind turbine rotors and other rotating devices.

For example: a normal condition may be a blade or a rotor operating under weather conditions with no rain or no other precipitation. A corresponding abnormal condition may be operation with rain or other precipitation.

For example: a normal condition may be operation during rain or other precipitation. A corresponding abnormal condition may be operation during heavy rain or other heavy precipitation.

For example: a normal condition may be operating with a wind turbine blade as provided intact or according to specification including a certain level of lamination. A corresponding abnormal condition may be operation with a blade with delamination (with respect to the certain level of lamination).

For example: a normal condition may be operating with a wind turbine blade without loose objects inside the blade. A corresponding abnormal condition may be operating with one or more loose object(s) inside the blade. An object may be a tool, a bolt, a part of the blade, such as fiberglass.

For example: a normal condition may be operation without impacts on a blade. A corresponding abnormal condition may be operation with an impact on a blade. An impact may be the event of a bird or a bat etc. colliding with a blade.

For example: a normal condition may be operation without structural damage on a blade. A corresponding abnormal condition may be operating with structural damage on a blade. Structural damage may be a relative difference in between lamination layout of the blades, a relative difference in between structures incorporated in the blades, a dent or an asymmetry.

Further to the mentioned examples, according to a non-claimed embodiment, the methods and systems may also be used for sensing and listening for other flaws using rotor monitoring technology. Such other flaws can for example be as follows:
- dust/sand storms generating a high, unusual sound and/or an unusual vibration in a wind turbine blade which can be detected by algorithms;
- lightning strike generating a high, unusual, instantaneous peak of sound and/or an unusual, instantaneous peak in vibration in a wind turbine blade and can be detected by sensors and algorithms, as described;
- loose particles moving inside the blade and thus generating a monotonic, unusual sound and/or an unusual vibration in a wind turbine blade and can be detected by sensors and algorithms;
- damage on the individual blade surface or inside the blade structure generating unusual sounds and/or unusual vibrations in a wind turbine blade and can be detected by sensors and algorithms;
- birds and/or bats hitting the wind turbine blades can be detected from an instantaneous peak of noise/vibration.
- difference in between the blade pitch angles, bending and twisting is generating unusual sounds and/or unusual vibrations in a wind turbine blade and can be detected by sensors algorithms.

According to a non-claimed embodiment, the acts of detecting abnormal conditions may also include abnormal conditions of a rotor of a wind turbine generator. According to a non-claimed embodiment, the acts of detecting abnormal conditions may also include abnormal conditions, rotating mechanisms or machinery in general.

Accordingly, detection objects that are impacting the blade surface on wind turbine blades may be achieved.

A further effect may also be to reduce unbalanced rotation that can stress the hub due to, for instance, unequal ice accumulation on the three blades or difference in weight on the three blades or difference in aerodynamic efficiency of the three blades due to differences in pitch, bending and/or twisting of the blades.

Another effect may be improved monitoring of structural issues and differences in between wind turbine blades. For example, detection if there are loose objects moving inside wind turbine blades. For example, monitoring of acoustic differences due to difference in blade pitch angle, bending and twisting on wind turbine blades may be detected.

For example, according to a non-claimed embodiment, it is an object to monitor when wind turbine blades are being hit by lightning strikes.

A signature is understood as a signature in the sensory data as generated. A normal condition may have a normal signature. An abnormal condition may have an abnormal signature, which is different from the normal signature. As such, the abnormal condition may be characterised by a signature. The before-mentioned examples may each have their signature or label.

For example: a heavy rain or other heavy precipitation condition will have a heavy rain or heavy precipitation signature. The signature may be specific for the particular configuration or combination of blade, rotor, or wind turbine generator.

In an aspect, the act of identifying involves spectral analysis of the sensory input. In an aspect, the act of identifying involves statistical analysis of the sensory input. In an aspect, the act of identifying involves pattern recognition of the sensory input. In an aspect, the act of identifying involves analysis performed by way of machine learning or artificial intelligence on the sensory input. That is to say that an abnormal condition may be identified with a corresponding signature in the respective representation of the data from the sensory input. For example, an abnormal condition is learnt through a signature specific supervised algorithm trained on initially labelled data.

For example, heavy rain or heavy precipitation may be identified by a signature in a statistical analysis representation of the data.

A signature may rely on one or more features specific to the condition and/or fault or abnormal condition. These quantitative or qualitative features may be derived from the different input data using statistical tools such as aggregated in a model that predicts at a given time or time window, and given the input data from that time period, the probability of a condition existence with a given confidence, and maybe the intensity of some of the condition qualifications.

In an aspect, the act of identifying further involves an act of classifying an abnormal condition. For example, a signature may further classify heavy rain or heavy precipitation such as hail, raindrops (huge, large, medium, small, etc.), or types of snow. In another example, the algorithm may make use of a signature contrast to determine the intensity of the condition or some of its quantitative aspects.

Labelling may be provided as a matter of facts by virtue of definition or by design. A blade may be exposed to heavy rain and as such provide training data that by definition has signatures of heavy rain.

A blade may be operated under conditions with external or extra diagnostics providing or establishing the conditions for labelling. A rain detector, either on the turbine or from a reasonably close distance, may be used to classify or label data according to detected rain or other precipitation.

Alternatively, a LiDAR may be used to classify or label data according to detected weather conditions. Yet another alternative may involve an infrared triggered camera setup to identify a rain event. A person skilled in the art will appreciate available detection techniques as well as generally new or improved detection techniques.

When an algorithm or signature is established or a network trained, an external instrument may not be needed to provide labelled data anymore. Signatures may then be stored and used. For example, heavy rain or other precipitation can be identified only by algorithms and data from the sensors in the blades. Established algorithms or signatures may be applied to other or several wind turbine configurations.

In an aspect, the act of identifying involves identifying, i.e. identification of or learning, signatures by comparing normal signatures or pre-calibrated signatures of sensory input with measured signatures of sensory input. A normal signature may be a signature during normal conditions. A pre-calibrated signature may be a signature obtained by calibration or design a-priori.

Signatures may be "scaled" or calibrated according to e.g. blade type and size. Signatures may be "scaled" or calibrated according to e.g. operational conditions, such as rotational speed.

In an aspect, the act of measuring is performed by use accelerometers as vibration sensors arranged in one or more blades of the wind turbine generator. The vibration sensors may be indicative of vibrations on the wind turbine generator.

A one-axis accelerometer may be used. A two-, three-, or multiple axis accelerometer may be used. A vibration sensor may be a tri-axial acceleration sensor.

In an aspect, the act of measuring is performed by use of an acoustic sensor in combination with said accelerometers.

Applying a vibration sensor and acoustic sensor may provide additional input and/or improve labelling of data.

An acoustic sensor may be a microphone. The acoustic sensor may provide acoustic information and be implemented as an outlined sensor including a vibration sensor.

As an alternative a geophone sensor may be used.

Acoustic sensors, and/or geophone sensors may be used in combination.

For example, the audible range of frequencies for human ranges from 20Hz - 20 KHz.

As stated in the Nyquist theorem the sampling frequency could be a starting point to be at least twice as great as the signal of interest to be captured. A skilled person will attempt to apply lower sampling frequencies to reduced data whilst obtaining sufficient information is a natural approach. The dBSPL range of the microphone can be between 65-152 dB SPL. The dBSPL range may however change or depend on the actual application or type of machinery or wind turbine generator.

A person skilled in the art will appreciate that a sampling rate may vary according to the requirements. However, for sampling rate this depends on the signal of interest.A starting point may be a sampling frequency twice the signal of interest. Lower sampling frequencies may also be sufficient. Some experimentation may be applied to find the sampling frequency that should be chosen as desired based on the application.

The parameters of the input data and labelling sensors such as their sensitivity or sampling frequency may vary depending on the signal of interest and other potential system, robustness or synchronisation requirements. Various experiments will be used and the best parameters will be chosen for identification of the various mentioned conditions. Different sensors could potentially have different parameters in order to capture different patterns of different conditions.

Also, a person skilled in the art will, depending on the application, appreciate that an alternative dBSPL- range may affect the sensor selection.

In an aspect, the act of measuring is performed by use of sensory input including different types of sensory input. According to the claims, use is made of accelerometers as vibration sensors.

Correlations of signals or between signatures as identified may further clarify or identify signatures or classifications.

For example, each raindrop hitting the blade acts as a source of vibration. Rainfall varies both in number of drops falling, and their size. The amount of kinetic energy imparted on the blade is governed by the drops size and speed. The size of a raindrop is proportional to the intensity of rain, thus vibrations from raindrops hitting blades should increase depending on rainfall rate / impacting object. A person skilled in the art will appreciate the dependency on the rotational speed of the rotor or machinery and thus the blade tip speed and to factor the dependency into consideration.

The data from vibration sensor(s): One or multiple vibration sensor located inside one or several blades and may be configured to continuously transmit the data wirelessly to a collection box.

As such parts of analysis and processing or pre-processing may be performed in a sensor node located in e.g. a blade.

The data covers all the data collected from installation time and its size and frequency is a parameter that can be either fixed or changing depending on the condition signature and/or an event-trigger indicated by the same data.

Acceleration is measured through these vibration sensor(s) on one, two, three axes; or generally in a multi-axial setup.

Final data of timestamps and corresponding acceleration values can be aggregated with other sensors or turbine state data and is presented to the algorithm for a specified moving time window that may change depending on the condition to be looked at.

In an aspect, the act of measuring is based on time-stamped and synchronized sensory data. That is that one sensor input is synchronized with another sensor input. In an aspect, there may be one higher resolution sensory input and one or more, lower resolution sensory input.

In an aspect, the act of identifying is performed locally in connection with measuring sensory input.

A vibration sensor may be arranged in a sensor node. A sensor node may be configured with a communication link configured to transfer data to a central processor.

A sensor node may be configured with a processor to perform identification as outlined. A sensor node may be configured with means for updating signatures. A sensor node may be configured with means to pre-process or even process sensory input. This allows a sensor node to operate using as little power consumption as possible. As such, it may be advantageous to provide a processor at a sensor node with the extra efforts as compared to having the sensor node transmit data (high sampling rate) to a processor placed elsewhere. Thereby mitigating adverse power consuming effects related to wireless transmission data.

A sensor node may further be provided with means to adjust sampling rate/frequency of the sensor. The sampling may be adjusted dynamically, according to the condition and the signature. A sensor node may operate at low power consumption with a low resolution, and if a signature is expected or otherwise indicated, the sensor node may adjust sampling and processing to increase resolution in attempt to determine if a signature of an abnormal condition is present more decisively.

A sensor node may also operate with a moving window in the sense that normal data will be deleted and not wirelessly transferred for further processing. Algorithms in the sensor node may identify abnormal data and then potentially trigger a shift in sampling frequency and storage of data a certain time before and after the trigger event and kept for further detailed processing. The time window may be predefined or change according to the actual situation.

In an aspect, the abnormal condition is a condition of heavy rain, and the act of identifying signatures is performed by way of artificial intelligence (AI) or machine learning (ML) arrangements, among others, that are trained and fed by sensory input provided by said accelerometers as vibration sensors. Optionally, there may be a data feed from one or more acoustic sensors. The sensors are located in one or more blades of the wind turbine generator.

Alternatively, the act of identifying signatures is performed by identifying changes in spectral content of the data.

Identification of heavy rain or other heavy precipitation in this way has shown to be particularly simple compared to other used means of diagnostics that are solemnly directed to identify heavy rain or other heavy precipitation.

The use of the mentioned acts and signatures allows for rapid, cheap and constant identification of condition and condition monitoring of blades and rotor.

Indeed, after training, the algorithm needs the input data from a limited, possibly a moving, time window to very fast calculate predictions of the multivariate condition.

The acts eliminate the use of direct rain measurements such as MET stations and rely on inexpensive sensors with almost no human intervention. The setup and acts drastically reduce the costs and complexity. Finally, and once the algorithm is trained, moving the time window allows a continuous assessment of the condition and potential faults. Furthermore, A "moving window" allows storage and transfer of important abnormal time stamped data for further analysis and training of algorithms. A "moving window" also allows the deletion already in the sensor node of "normal" time data thereby reducing power consumption in the sensor node.

Another advantage may actually be physical robustness, as the system will be installed inside the blades and is thus protected from the mentioned conditions which can affect outside measurements and the state of potential outside sensors.

Icing reduces the aerodynamic efficiency of the rotor blades and thus causes production losses and increased noise emissions. Moreover, additional ice loads may lead to extreme loads and increased fatigue.

According to a non-claimed embodiment, detecting icing as an abnormal condition can help extending the turbine lifetime and give more accurate energy production expectations.

Additionally, iced wind measurement sensors such as anemometers may lead to erroneous behaviour and security stops, with a higher uncertainty leading to uncertainty of production, our system would be able to take that in account and potentially correct for the icing factor.

Finally, according to a non-claimed embodiment, ice throw and ice fall from the iced blades represent a significant safety risk for passer-by and service personnel which can also be improved abnormal condition detection as described.

Dust and sandstorms: With growing dust on the surface of wind turbine blades, the drag force of the air foil increases, but the lift force decreases, diminishing the power output of the turbine. Also, the dusting on the rotor's blades of horizontal axis stall-regulated wind turbines may lead among other things to long time stops with no production due to heavy accumulated dust and safety demands, decreased power production and maintenance costs. The amount and effect of accumulated dust depends on the specifications of the rotor turbine, speed of rotor etc. which could be regulated following our system predictions to minimise dust amount and effect on production. Operation of a wind turbine generator may thus be restricted or corrected as outlined herein.

Dust and sand storms will also have the a similar impact on the leading edge of the blades as heavy rain etc. and it is therefore important to be able to identify levels above a certain threshold where the blade tip speed should be reduced or even the rotor completely stopped to avoid damage to the leading edge of the blades.

Loose objects example: Identifying such event can also extend the lifetime of the turbine by avoiding the possible deterioration of the blades, nacelle or rotor due to the impact of such objects if it constantly stays there. The size and the nature of the object can also be informed which improves state of the art condition monitoring. This also improves safety for maintenance and passing especially if the objects can be detached from the turbine and apt to falling.

Bats and birds example: By identifying the occurrence of such event, it will be possible to exactly quantify the effect of a specific wind turbine on wildlife and thus study better such an issue.

According to claim 11, a method of operating a wind turbine generator is disclosed.

For example, blade erosion has been found to be caused by heavy rain or other heavy precipitation. However, it has been found that heavy rain or other heavy precipitation only occurs rarely - say some 4-12 hours yearly, such as 8 hours per year in some environments, and that heavy rain or other heavy precipitation under those limited periods of time contribute to erosion. Controlling or operating a wind turbine in a corrected manner during such periods of time may be advantageous despite an apparent loss of power generation

In an aspect, the act of controlling involves at least decreasing the rotational speed below a certain limit, pitching one or more blade, or yawing the nacelle during the abnormal condition.

For example, a wind turbine generator may be controlled differently than otherwise, during heavy rain or other heavy precipitation. There may be an act of reducing the rotational speed of the rotor to a rotation with a corresponding blade tip speed of below a certain limit, according to blade construction and occurrence of erosion, and according to the nature of heavy rain or other heavy precipitation. The tip speed may - during heavy rain or other heavy precipitation - be temporarily reduced to below a speed of 200 km/h, or in that order.

According to claim 15, a system for detecting heavy rain or hail on a blade on a wind turbine generator is described.

There may be a timer, a clock and means for timestamping and processing time-stamped data. The sensors or collection of data may be synchronized.

The means for performing the acts may be a computer, a controller, or a processor of any equivalent means of performing instruction.

In an embodiment, data is transferred to and processed by a substantially central computing or processing device. In an embodiment, data is processed locally in connection with a computer, processor, or controller adjacent or in connection with a sensor.

A sensor may be part of a sensor node, which node includes means for transmitting data.

In an embodiment, there is a kit of one or more sensors configured to wirelessly communicate with an included central processor unit configured to perform the described acts.

In an embodiment, there is a kit of one or more sensors configured with a processor to perform at least part of the described acts and optionally a central processor unit.

The controller or processing unit described is configured to communicate instructions with a wind turbine controller. The controller may be configured to collect, process data, and/or provide remote access to data. Additionally, the controller may be configured with implementation of algorithms as outlined.

In an aspect, the sensory means comprise one or more vibration sensors and optionally acoustic sensors configured to be placed in a blade of a wind turbine generator and configured to measure vibrations and optionally noise indicative of heavy rain or hail on the blade.

In an aspect, wherein the sensory means comprises one or more means adapted to execute the method acts as described.

According to claim 16, a system for operating a wind turbine generator is described.

There are means for controlling the wind turbine generator as a function of the detected heavy rain or hail on the blade.

There are means adapted for executing the method acts as disclosed.

Instructions to perform the acts may be collected or compiled in a computer program product comprising instructions to cause the system as described to execute the acts of the methods as described. There may be a computer-readable medium having stored there a computer program.

### BRIEF DESCRIPTION OF DRAWINGS

Embodiments of the invention will be described in the figures, whereon:
- Fig. 1: illustrates a method of detecting abnormal conditions;
- Fig. 2: illustrates a further aspect of identifying signatures;
- Fig. 3: illustrates a method of operating a wind turbine generator;
- Fig. 4: illustrates a wind turbine generator and sensory arrangement;
- Fig. 5: illustrates a sensory arrangement on blades;
- Fig. 6: illustrates further aspects of a sensory arrangement;
- Fig. 7: illustrates further optional or alternative aspects of sensory arrangement on a wind turbine generator, including a sensor node arrangement;
- Fig. 8: illustrates a wind turbine generator with a sensory arrangement in interaction with a remote/cloud-based processor;
- Fig. 9: illustrates a configuration of a sensor node;
- Fig. 10: illustrates the estimation of power spectral densities (PSD) of sensor data from acoustic recording;
- Fig. 11: exemplifies detection of a bird-strike, lighting strike, or other flaws as an abnormal condition;
- Fig. 12: illustrates the estimation of power spectral densities (PSD) of different signatures of rain conditions sensor data from acoustic recordings;
- Fig. 13: illustrates by way of example an algorithm or statistical setup for detecting abnormal conditions; and
- Fig. 14: illustrates use of principal component analysis for detecting abnormal conditions.

| **Item** | # |
|---|---|
| Rotary device | 10 |
| Wind Turbine Generator (WTG) | 12 |
| Rotor | 14 |
| Rotor sector | 18 |
| Set of rotor blades | 20 |
| Rotor blade/blade | 22 |
| Dataset | 30 |
| Data | 31 |
| Timestamped data | 32 |
| Timestamp | 34 |
| Set of blade sensors | 40 |
| Sensor means | 41 |
| Blade sensor | 42 |
| Sensor node | 45 |
| Node Power | 46 |
| Vibration sensor | 50 |
| Acoustic sensor | 60 |
| System for detecting abnormal conditions | 70 |
| Computational means/Processor | 72 |
| Communication | 74 |
| Storage | 76 |
| System for operating a wind turbine generator | 90 |
| Detecting | 100 |
| Normal condition(s) | 110 |
| Abnormal condition(s) | 120 |
| Heavy rain/precipitation | 121 |
| Sensory input | 140 |
| Signatures | 150 |
| Signatures of normal conditions | 152 |
| Signatures of calibrated conditions | 154 |
| Signatures of abnormal conditions | 155 |
| No Rain Signature | 160 |
| Light Rain Signature | 162 |
| Moderate Rain Signature | 163 |
| Heavy Rain Signature | 164 |
| Measuring | 200 |
| Synchronizing | 240 |
| Identifying | 300 |
| Operating | 500 |
| Controlling | 600 |
| Rotational speed | 610 |
| Rotational speed limit | 612 |
| Pitching | 620 |
| Yawing | 630 |

### DETAILED DESCRIPTION OF THE INVENTION

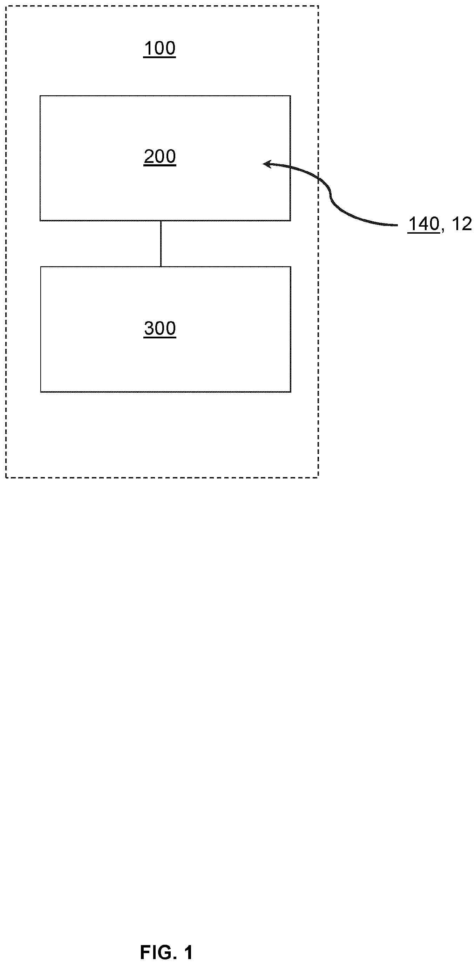

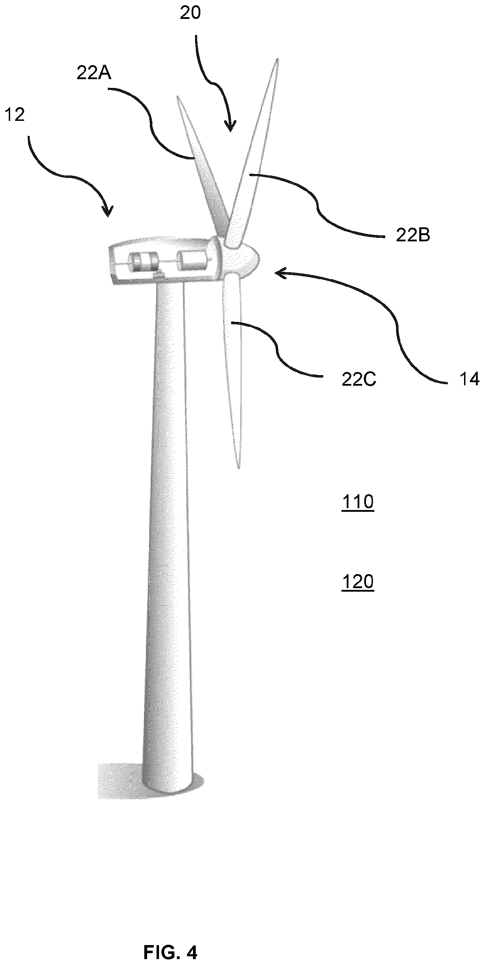

Figure 1 illustrates a method of detecting 100 abnormal conditions 120 of a blade 22 on a wind turbine generator 12 as illustrated in figures 4 to 9. The method 100 comprising an act of measuring 200 sensory input 140 from the wind turbine generator 12.

The method comprising an act of identifying 300 signatures of abnormal conditions 155 from the sensory input 140 say experienced by the blade 22.

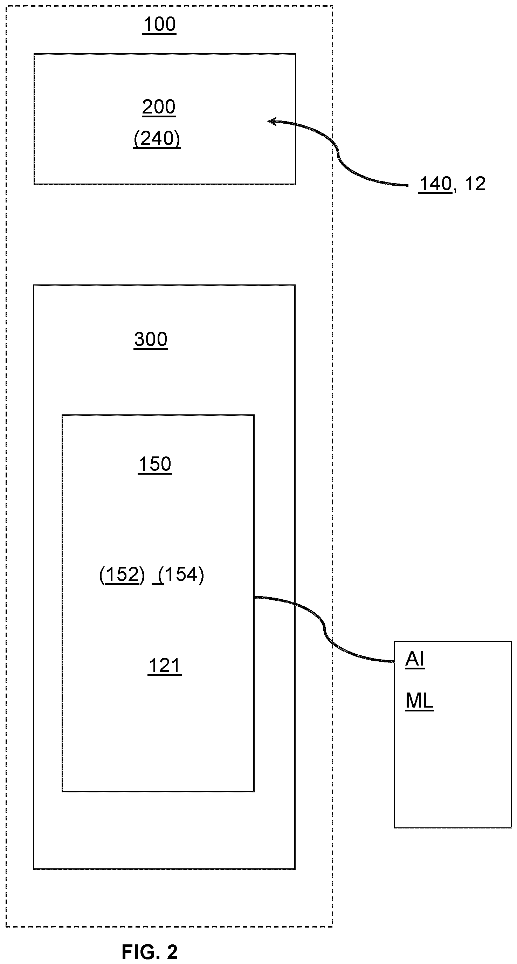

Figure 2 illustrates further aspects of identifying signatures 150 of abnormal conditions 120, that is abnormal signatures 155.

The act of measuring 200 may involve an act of synchronizing 240 the sensory input. The act of synchronizing 240 may in principle be performed as part of identifying 300.

As will be exemplified, the act of identifying 300 may involve identifying signatures 150 by comparing normal signatures 152 or pre-calibrated signatures 154 of sensory input 140 with measured signatures 150 of sensory input 140.

The act of identifying a signature 150 may involve spectral analysis of the sensory input 140, it may involve statistical analysis of the sensory input 140, it may involve pattern recognition of the sensory input 140, it may be with use of machine learning (ML), or be with use of artificial intelligence (AI), on the sensory input 140.

The act of identifying 300 a signature 150 may be that of a condition of heavy rain or other heavy precipitation 121. The act of identifying 300 signatures 150 may be by way of artificial intelligence (AI) or machine learning (ML) fed by sensory input 140 provided by one or more sensory inputs 140 from a wind turbine generator 12.

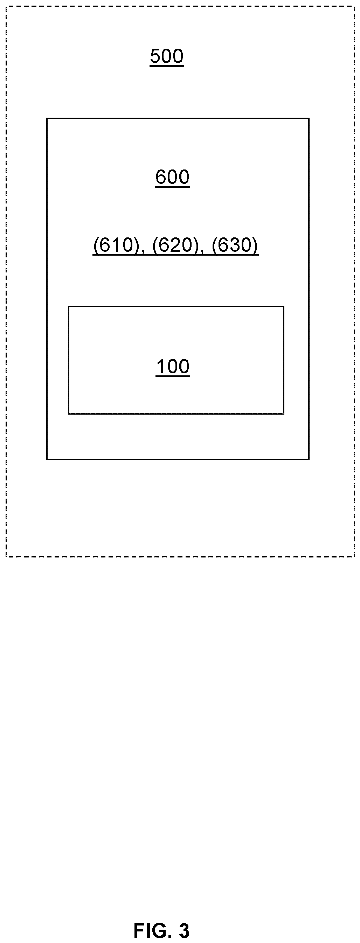

Figure 3 illustrates a method of operating 500 a wind turbine generator 12 (not shown, but exemplified in other figures) by an act of controlling 600 the wind turbine generator 12 as a function of detected abnormal conditions 120, according to methods or acts 100 as outlined.

The act of controlling 600 may involve at least decreasing the rotational speed 610 below a certain limit 612 (not shown), pitching 620 one or more blades, or yawing 630 the nacelle during the abnormal condition 120.

Figure 4 illustrates a wind turbine generator 12 comprising a rotor 14 with a set of rotor blades 20. The set of rotor blades 20 comprises here three rotor blades 22A, 22B, 22C. The wind turbine generator 12 may operate during normal conditions 110 and experience abnormal conditions 120. The abnormal conditions may be temporarily in nature.

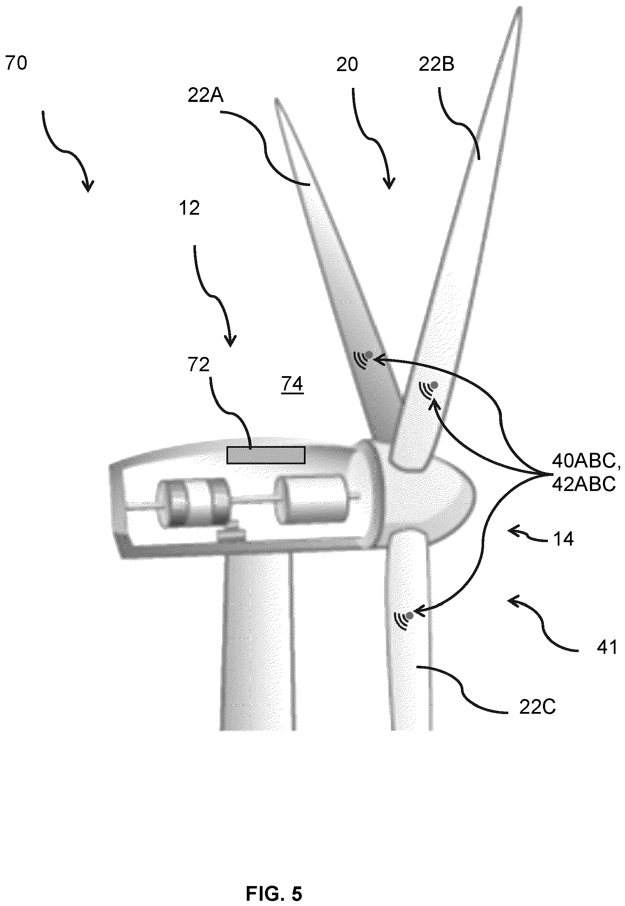

Figure 5 illustrates a sensory arrangement on blades 22A, 22B, 22C on a wind turbine generator 12 with a rotor 14. The blades 22A, 22B, 22C is a set of rotor blades 20. Each blade 22A, 22B, 22C comprises a set of blade sensors 40A, 40B, 40C as sensor means 41. In the present case, each set of blade sensors 40A, 40B, 40C comprises a blade sensor 42A, 42B, 42C. The blade sensor may be a vibration sensor 50 (not shown) or an acoustic sensor 60 (not shown).

The sensory arrangement may be part of a system for detecting abnormal conditions 70.

A blade sensor 42 is configured to be in communication 74 with a controller or computational means 72. The communication 74 may be wired or wireless as illustrated here.

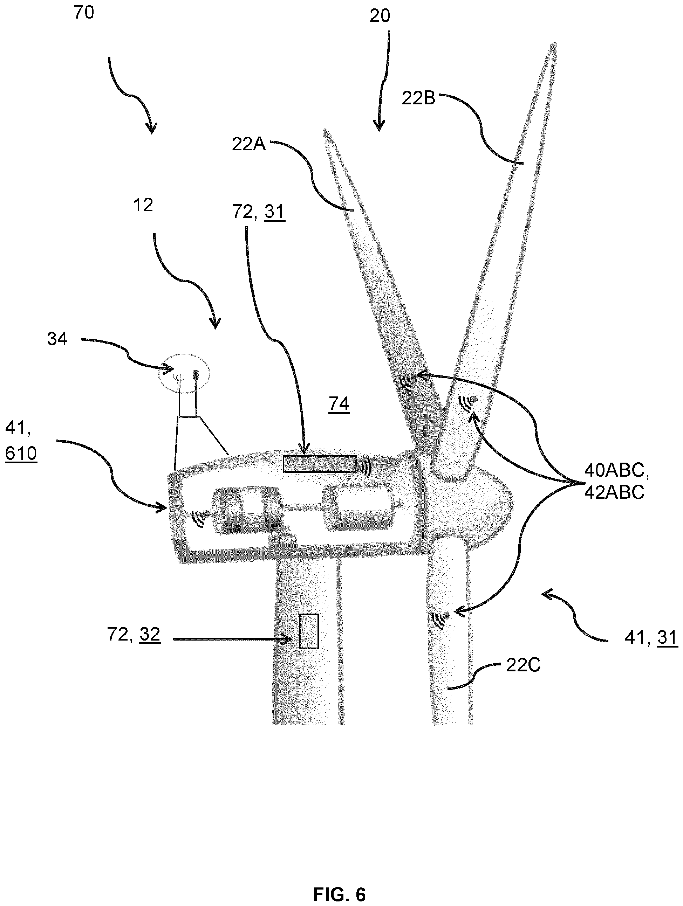

Figure 6 illustrates further aspects of sensory arrangements on a wind turbine generator 12. There may be a timer or clock configured to provide data 31 from the sensory means 41 with a time stamp 34, which thus provides timestamped data 32 or synchronized data for processing by the computational unit 72.

The wind turbine generator (WTG) 12 is with a rotor 14 and a set of rotor blades 20. The set of rotor blades 20 is with three rotor blades 22A, 22B, 22C.

Each blade 22A, 22B, 22C comprises a set of blade sensors 40A, 40B, 40C. In the present case each set of blade sensors 40A, 40B, 40C comprises a blade sensor 42A, 42B, 42C.

A further sensor means 41 is shown. In this embodiment, the further sensor is a rotary sensor (RPM-sensor or vibration sensor), such as a high sampling speed sensor measuring the rotational speed 610. The system may be configured for an act of synchronizing 240, as shown in figure 2 or variations thereof, and based on sensors 42ABC, and synchronization is performed against at least one other sensor 41.

The sensory arrangement may be part of a system for detecting abnormal conditions 70. The computational means 72 or controller may be a single unit or distributed as illustrated here.

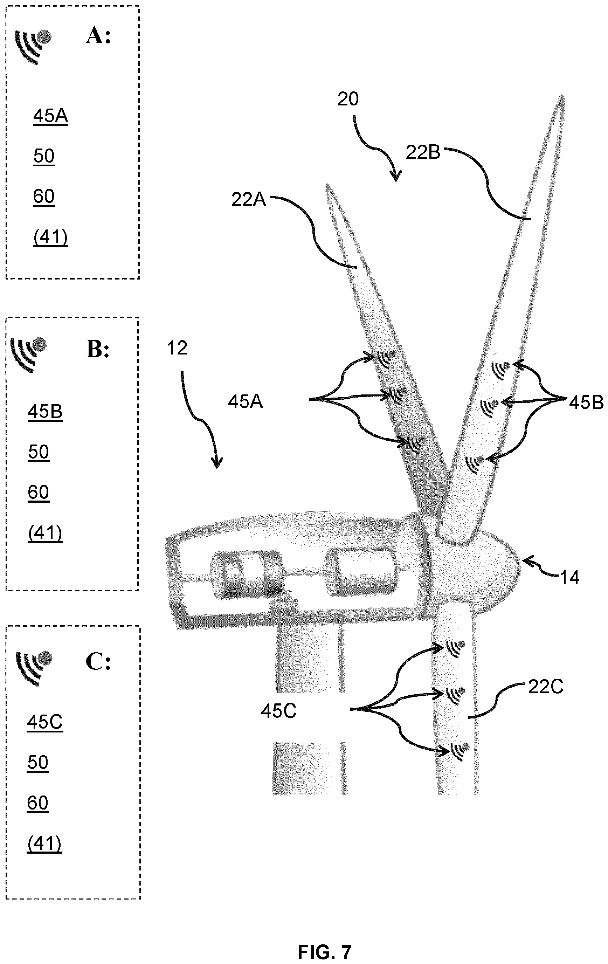

Figure 7 illustrates further optional or alternative aspects of a sensory arrangement on a wind turbine generator 12.

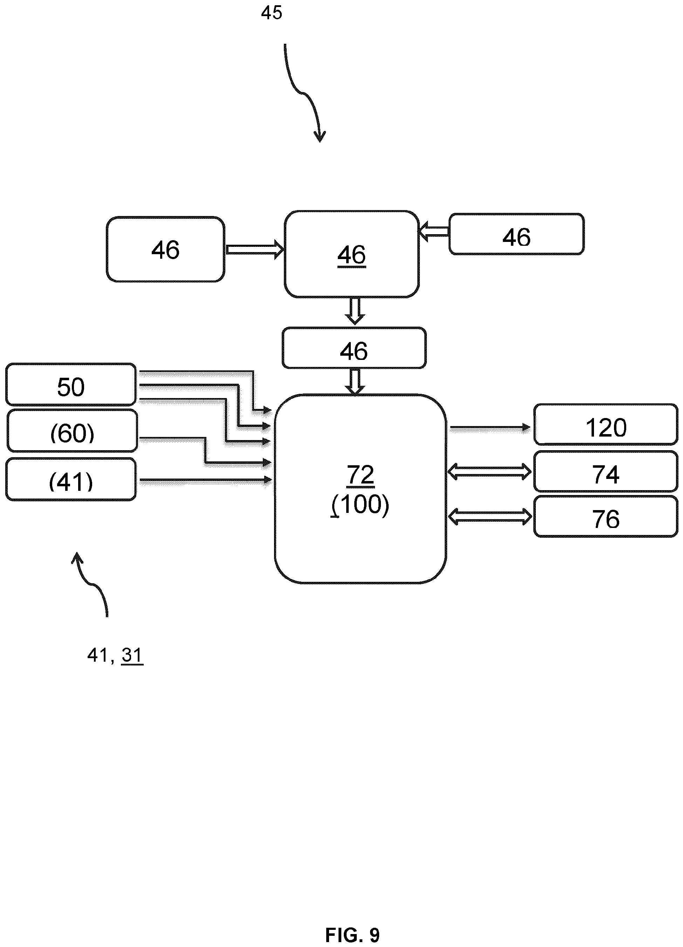

The sensors 42 may be implanted as a sensor node 45 (see figure 9) as illustrated by sensor nodes 45A, 45B, 45C. A sensor node may have a vibration sensor 50, and an acoustic sensor 60. There may also be additional sensor means 41.

A sensor node 45 may comprise essential processing 72 and be adapted for performing the acts or at least part of the acts of detecting 100.

A set of sensors 40 may be understood as a sensor node 45 with one or more sensors. Such a sensor node 45 may comprise processors or means to configure, collect, store and process generated sensor data. A sensor node 45 may have communication means to communicate with a controller (not shown) or other sensor nodes. A sensor node 45 may have means to synchronize 240 (as illustrated previously) say sensors 50, 60.

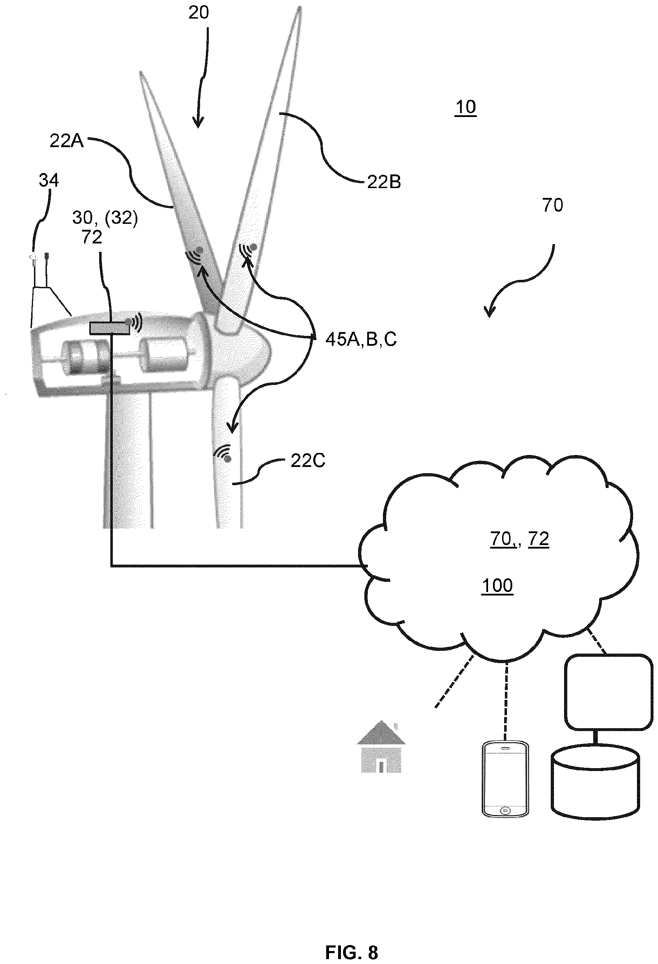

Figure 8 illustrates a wind turbine generator 12 with a sensory arrangement in interaction with a remote/cloud-based processor 72 as part of a system for detecting abnormal conditions 70.

The rotary device 10 comprises a set of rotor blades 20. The set of rotor blades 20 consists of three rotor blades 22A, 22B, 22C.

Each blade 22A, 22B, 22C comprises a set of blade sensors 40A, 40B, 40C. In the present case, each set of blade sensors 40A, 40B, 40C comprises a blade sensor 42A, 42B, 42C.

The data sets 30 are processed by computational means 72. The wind turbine generator 12 may have a clock for generating a timestamp 34. In this case the time stamp is further synchronized and delivered from a global time server. Hence, the datasets 30 may be timestamped data 32. Alternatively, each sensor node 45 may be synchronized and the timestamp 34 may be applied at sensor node level.

The system 70 may interact with an operator system, a mobile device, a client server and a storage or database via a cloud/connection service. Further access or mirroring or monitoring may be available via the cloud for long term monitoring, alerts or service programmes.

The methods and acts of detecting 100 disclosed herein may be performed in a single processor 72 device or be distributed as illustrated here.

Figure 9 illustrates a configuration of a sensor node 45. There is a node power 46 management layout, which may include a source of energy, storage of energy, a controller of power management and an interface for configuration/control and possibly charging.

The sensor node 45 is illustrated with a processor or computational means 72. The sensor node 45 includes sensory means 41 generating data 31. Illustrated is a vibration sensor 50, which in this case has three lines of output and could for example be a tri-axial accelerometer. Optionally, there is an acoustic sensor 60. Optionally, there are further sensor(s) means 41.

The computational means 72 may be adapted to perform instructions to perform one or more, or all of the acts as outlined to perform detection 100 and to support or fully determine abnormal conditions 120.

The sensor node 45 is configured with communication means 74 and here with storage means 76.

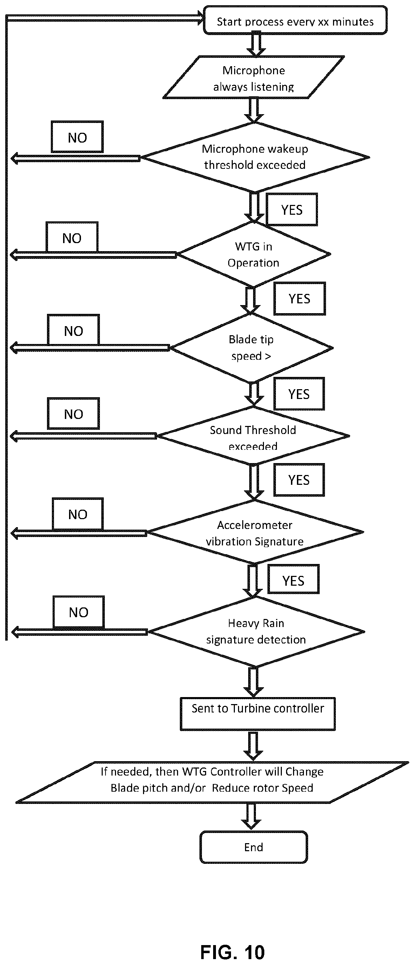

Figure 10 exemplifies detection 100 of and operation during heavy rain as an abnormal condition.

The detection 100 of abnormal conditions is exemplified by the following acts.

There is an initial act of setting a start process every set time or minutes. There is an act of making a microphone be in a state of listening.

There is an act of checking if a microphone wakeup threshold is exceeded. In a positive case proceed to a next check or in a negative case return to a previous act or start.

There is an act of checking if the WTG is in operation. In a positive case proceed to a next check or in a negative case return to a previous act or start.

There is an act of checking if the blade tip speed > 200km/h. In a positive case proceed to a next check or in a negative case return to a previous act or start.

There is an act of checking if a sound threshold is exceeded. In a positive case proceed to a next check or in a negative case return to a previous act or start.

There is an act of checking if an accelerometer vibration signature 150 is present. In a positive case proceed to a next check or in a negative case return to a previous act or start.

There is an act of checking if a heavy rain signature 150 is present. In a positive case proceed to a next check or in a negative case return to a previous act or start.

In case of heavy rain detection 100 there is an act of sending the detection to a WTG controller. In a negative case, return to a previous act or start.

There is an act of, if needed, controlling the WTG by a corrective action such as a blade pitch angle, a rotor speed reduction or combinations thereof. If needed, then WTG controller will change blade pitch and/or reduce rotor speed.

There is an act of ending (completing) detection.

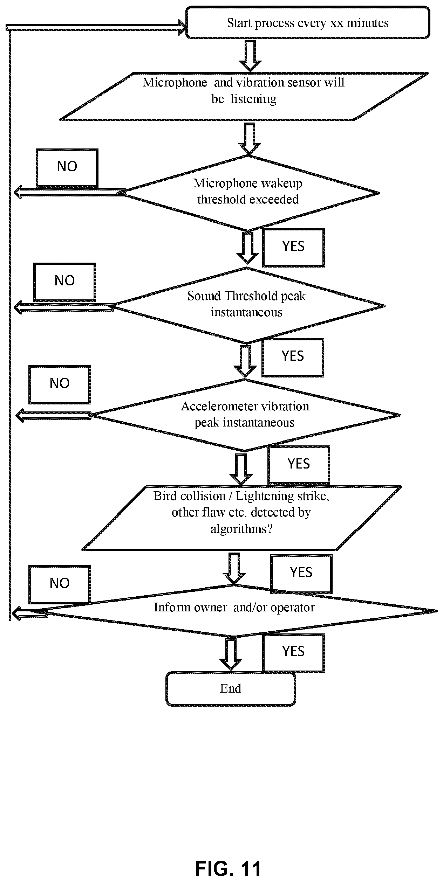

Figure 11 exemplifies detection 100 of abnormal conditions as a bird-strike, lighting strike, or other flaws.

The detection 100 of abnormal conditions is exemplified by the following acts.

There is an initial act of setting a start process every set time or minutes. There is an act of making a microphone be in a state of listening.

In this case there is an act of making a microphone (optionally) and vibration sensor set to listening.

There is an act of checking if a microphone wakeup threshold is exceeded. In a positive case proceed to a next check or in a negative case return to a previous act or start.

There is an act of checking if a sound (acoustic) threshold peak is instantaneous. In a positive case proceed to a next check or in a negative case return to a previous act or start.

There is an act of checking if an accelerometer vibration peak is instantaneous. In a positive case an abnormal condition is detected or in a negative case return to a previous act or start.

With an abnormal condition detected, the abnormal condition is classified as e.g. a bird collision, a lightning strike, or other flaws.

There is an act of checking which corrective action or communication is to be performed such as inform an owner and/or an operator.

There is an act to end detection.

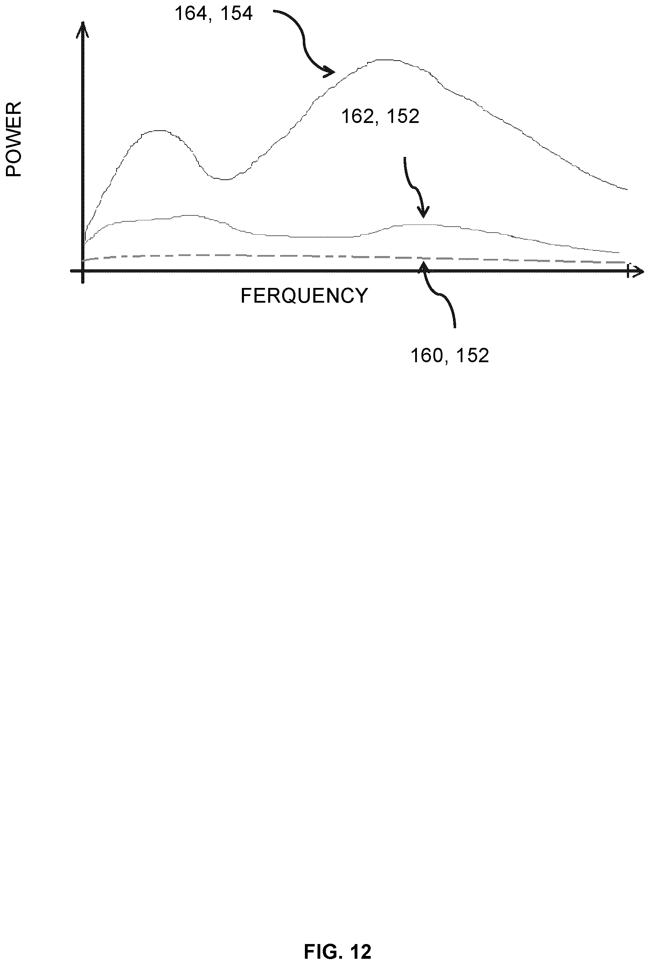

Figure 12 illustrates the estimation of power spectral densities (PSD) of sensor data from acoustic recordings, with the similar signatures for acceleration data, for different rainfall intensities. There is a case of a "No Rain"-signature 160, and also a signature of normal conditions 152. There is a case of a "Light Rain"-signature 162, and also a signature of normal conditions 152. There is a case of a "Heavy Rain"-signature 164, and also a signature of abnormal conditions 155. The arrows are located at a frequency band that mostly differentiates among rainfall levels (i.e. 600-1200 Hz approx.).

A person skilled in the art will by way of collecting and classifying power spectral densities with actual conditions be able to identify or distinguish "heavy rain" both qualitatively (i.e. rain from no rain) and quantitatively (i.e. heavy rain from light rain).

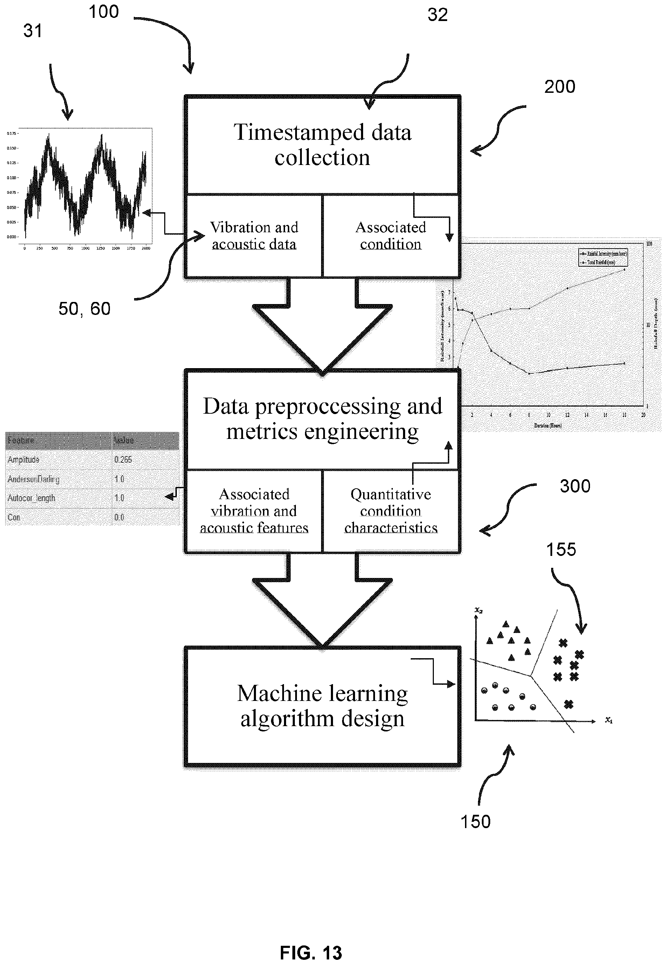

Figure 13 illustrates by way of example a setup for detecting 100 abnormal conditions.

There are acts of measuring 200 and identifying 300 abnormal conditions signatures 155. The setup may be performed to enable machine learning to perform the identification.

There is an act of collecting data 31, from e.g. vibration sensors 50 and/or acoustic sensors 60. The data 31 may be time stamped data 32.

As such there is an act of measuring 200 input from sensors. There is an act of comparing or generating associated conditions (i.e. "Heavy Rain"-, "Light Rain"-, or "No Rain"-conditions.

Furthermore, there is an act of identifying 300 signatures 150 of abnormal conditions 155.

The act of identifying 300 involves acts of prepressing data and/or use of metrics engineering. There is an act of associating vibration and acoustic features. Such features may be an amplitude, a correlation length other associable features. There is an act of quantifying conditions of characteristics based on the previously associated conditions.

The act of identifying 300 involves acts of using machine learning algorithms. Machine learning will classify (say cluster) signatures 150. Illustrated for example is an illustration of clustering/classification according to "No Rain"-conditions (triangles), and "Rain"-conditions (circles and squares), where "Heavy Rain" conditions (squares) are abnormal conditions 155.

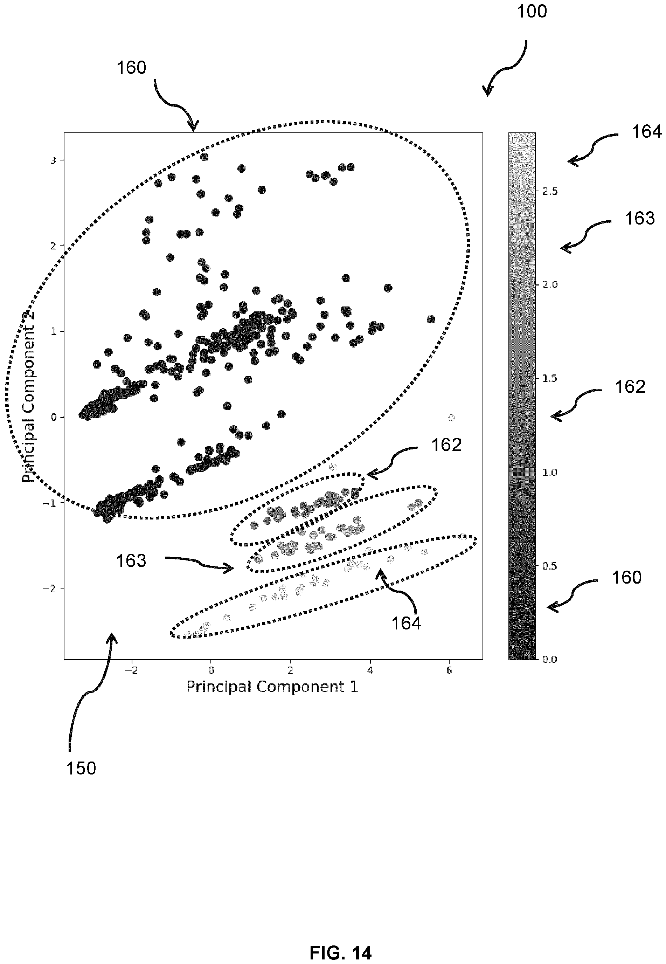

Figure 14 illustrates by way of example signatures 150 for detecting 100 abnormal conditions.

The signatures 150 are established by detecting a projection of transformed vibration data featuring values of one wind turbine into a lower 2 dimensional space by using Principal Components Analysis (PCA).

Each point represents a fixed duration of vibration data of the same wind turbine at a different date, here 1 minute.

The colour (intensity) represents the rain intensity in mm/h. The figure clearly shows the differential signature of rain and its intensity, which is stratified as colours going from dark (No Rain 160) to green (Light Rain 162 and Moderate Rain 163) to yellow (Heavy Rain 164); as indicated by placed arrows in the figure.

In this particular case only data from accelerometers in a blade of a wind turbine is used. A person skilled (i.e. including a statistician) in the art will appreciate multiple different algorithms or packages to perform the statistical analysis (here classical principal component analysis) or variants thereof. The interesting observation is that rain conditions clearly are distinguishable by use of data from accelerometers, which accelerometers may be readily or already installed and used for other purposes.

## Claims

1. A method of detecting (100) heavy rain (164) or hail on a blade (22) on a wind turbine generator (12), comprising the following acts:
- measuring (200) sensory input (140) from the wind turbine generator (12);
- identifying (300) signatures (150) of heavy rain (164) or hail on the blade (22) from the sensory input (140),
**characterized in that**, the act of measuring (200) is performed by means of accelerometers as vibration sensors (50).

2. The method (100) according to claim 1, wherein the act of measuring (200) is performed by means of only accelerometers as vibration sensors.

3. The method (100) according to claim 1 or 2, wherein the act of identifying (300) involves spectral analysis of the sensory input (140), statistical analysis of the sensory input (140), pattern recognition of the sensory input (140), or analysis by way of machine learning or artificial intelligence on the sensory input (140).

4. The method (100) according to anyone of claims 1-3, wherein the act of identifying (300) involves identifying signatures (150) by comparing normal signatures (152) or pre-calibrated signatures (154) of sensory input (140) with measured signatures (150) of sensory input (140).

5. The method (100) according to any one or more of claims 1 to 4, wherein the act of identifying (300) is performed by labelling identified (100) signatures established by an external instrument.

6. The method (100) according to any one or more of claims 1 to 5, wherein the act of measuring (200) is performed by use of said accelerometers as vibration sensors (50) arranged in one or more blades (22) of the wind turbine generator (12).

7. The method (100) according to any one or more of claims 1 to 6, wherein the act of measuring (200) is performed by use of an acoustic sensor (60).

8. The method (100) according to any one or more of claims 1 to 7, wherein the act of measuring (200) is based on time-stamped (34) and synchronized sensory data (31).

9. The method (100) according to any one or more of claims 1 to 8, wherein the act of identifying (300) is performed locally in connection with measuring (200) sensory input (140).

10. The method (100) according to any one or more of claims 1 to 9, wherein the act of identifying (300) signatures (150) is performed by way of artificial intelligence or machine learning (ML) fed by sensory input (140) provided by said accelerometers as vibration sensors (50) and optionally one or more acoustic sensors (60) located in one or more blades (22) of the wind turbine generator (12).

11. A method of operating (500) a wind turbine generator (12) by an act of controlling (600) the wind turbine generator (12) as a function of the detected heavy rain (164) or hail according to the methods (100) of any one or more of claims 1 to 10.

12. The method (500) according to claim 11, wherein the act of controlling (600) involves at least decreasing the rotational speed (610) below a certain limit (612), or pitching (620) the one or more blades, or yawing (630) the nacelle during the heavy rain (164) or hail.

13. The method (500) according to claim 12, wherein the act of controlling (600) is performed temporally during the detected heavy rain or hail and at lower power generation level.

14. The method (500) according to anyone of claims 12 or 13, wherein the rotational speed temporarily is reduced to reduce the tip speed to below a speed of 200 km/h.

15. A system for detecting heavy rain (164) or hail on a blade (22) on a wind turbine generator (12), the system comprising
- sensory means (41) providing a sensory input (140) indicative of vibrations;
- means adapted for executing the acts according the method (100) of any one or more of claims 1 to 10.

16. A system for operating a wind turbine generator (90) comprising:
- the system of claim 15;
- means for controlling the wind turbine generator (12) as a function of the detected heavy rain (164) or hail on the blade (22);
- means adapted for executing the method acts according to any one or more of claims 1 to 14.

## Patentansprüche

1. Verfahren zum Erfassen (100) von schwerem Regen (164) oder Hagel auf einem Rotorblatt (22) an einem Windturbinengenerator (12), das die folgenden Handlungen umfasst:
- Messen (200) einer sensorischen Eingabe (140) von dem Windturbinengenerator (12);
- Identifizieren (300) von Signaturen (150) von schwerem Regen (164) oder Hagel auf dem Rotorblatt (22) von der sensorischen Eingabe (140),
**dadurch gekennzeichnet, dass** die Handlung des Messens (200) durch Beschleunigungsmesser als Schwingungssensoren (50) durchgeführt wird.

2. Verfahren (100) nach Anspruch 1, wobei die Handlung des Messens (200) nur durch Beschleunigungsmesser als Schwingungssensoren durchgeführt wird.

3. Verfahren (100) nach Anspruch 1 oder 2, wobei die Handlung des Identifizierens (300) eine Spektralanalyse der sensorischen Eingabe (140), eine statistische Analyse der sensorischen Eingabe (140), eine Mustererkennung der sensorischen Eingabe (140) oder eine Analyse über maschinelles Lernen oder künstliche Intelligenz an der sensorischen Eingabe (140) beinhaltet.

4. Verfahren (100) nach einem der Ansprüche 1-3, wobei die Handlung des Identifizierens (300) ein Identifizieren von Signaturen (150) durch Vergleichen normaler Signaturen (152) oder vorkalibrierter Signaturen (154) der sensorischen Eingabe (140) mit gemessenen Signaturen (150) der sensorischen Eingabe (140) beinhaltet.

5. Verfahren (100) nach einem oder mehreren der Ansprüche 1 bis 4, wobei die Handlung des Identifizierens (300) durch ein Kennzeichnen von identifizierten (100) Signaturen, die durch ein externes Instrument eingerichtet sind, durchgeführt wird.

6. Verfahren (100) nach einem oder mehreren der Ansprüche 1 bis 5, wobei die Handlung des Messens (200) mittels der Beschleunigungsmesser als Schwingungssensoren (50), die in einem oder mehreren Rotorblättern (22) des Windturbinengenerators (12) angeordnet sind, durchgeführt wird.

7. Verfahren (100) nach einem oder mehreren der Ansprüche 1 bis 6, wobei die Handlung des Messens (200) mittels eines Akustiksensors (60) durchgeführt wird.

8. Verfahren (100) nach einem oder mehreren der Ansprüche 1 bis 7, wobei die Handlung des Messens (200) auf zeitgestempelten (34) und synchronisierten sensorischen Daten (31) basiert.

9. Verfahren (100) nach einem oder mehreren der Ansprüche 1 bis 8, wobei die Handlung des Identifizierens (300) lokal in Verbindung mit dem Messen (200) der sensorischen Eingabe (140) durchgeführt wird.

10. Verfahren (100) nach einem oder mehreren der Ansprüche 1 bis 9, wobei die Handlung des Identifizierens (300) von Signaturen (150) durch künstliche Intelligenz oder maschinelles Lernen (ML), gespeist durch die sensorische Eingabe (140), bereitgestellt durch die Beschleunigungsmesser als Schwingungssensoren (50) und optional einen oder mehrere Akustiksensoren (60), die sich in einem oder mehreren Rotorblättern (22) des Windturbinengenerators (12) befinden, durchgeführt wird.

11. Verfahren zum Betreiben (500) eines Windturbinengenerators (12) durch eine Handlung des Steuerns (600) des Windturbinengenerators (12) in Abhängigkeit von dem erfassten schweren Regen (164) oder Hagel gemäß den Verfahren (100) nach einem oder mehreren der Ansprüche 1 bis 10.

12. Verfahren (500) nach Anspruch 11, wobei die Handlung des Steuerns (600) mindestens ein Verringern der Drehzahl (610) unter eine bestimmte Grenze (612) oder ein Anstellen (620) des einen oder der mehreren Rotorblätter oder ein Gieren (630) der Gondel bei schwerem Regen (164) oder Hagel beinhaltet.

13. Verfahren (500) nach Anspruch 12, wobei die Handlung des Steuerns (600) vorübergehend während des erfassten schweren Regens oder Hagels und auf einem niedrigeren Stromerzeugungsniveau durchgeführt wird.

14. Verfahren (500) nach einem der Ansprüche 12 oder 13, wobei die Drehzahl vorübergehend verringert wird, um die Spitzengeschwindigkeit auf unter eine Geschwindigkeit von 200 km/h zu verringern.

15. System zum Erfassen von schwerem Regen (164) oder Hagel auf einem Rotorblatt (22) an einem Windturbinengenerator (12), wobei das System Folgendes umfasst:
- sensorische Mittel (41), die eine sensorische Eingabe (140) bereitstellen, die auf Schwingungen hinweist;
- Mittel, die zum Ausführen von Handlungen gemäß dem Verfahren (100) nach einem oder mehreren der Ansprüche 1 bis 10 angepasst sind.

16. System zum Betreiben eines Windturbinengenerators (90), umfassend:
- System nach Anspruch 15;
- Mittel zum Steuern des Windturbinengenerators (12) in Abhängigkeit von dem erfassten schweren Regen (164) oder Hagel an dem Rotorblatt (22);
- Mittel, das zum Ausführen der Verfahrenshandlungen nach einem oder mehreren der Ansprüche 1 bis 14 angepasst ist.

## Revendications

1. Procédé de détection (100) de pluie forte (164) ou de grêle sur une pale (22) sur un générateur d'éolienne (12), comprenant les actions suivantes :
- la mesure (200) d'une entrée sensorielle (140) en provenance du générateur d'éolienne (12) ;
- l'identification (300) de signatures (150) de pluie forte (164) ou de grêle sur la pale (22) en provenance de l'entrée sensorielle (140),
**caractérisé en ce que** l'action de mesure (200) est effectuée au moyen d' accéléromètres en tant que capteurs de vibrations (50) .

2. Procédé (100) selon la revendication 1, dans lequel l'action de mesure (200) est effectuée au moyen d' accéléromètres uniquement en tant que capteurs de vibrations.

3. Procédé (100) selon la revendication 1 ou 2, dans lequel l'action d'identification (300) implique une analyse spectrale de l'entrée sensorielle (140), une analyse statistique de l'entrée sensorielle (140), une reconnaissance de motif de l'entrée sensorielle (140), ou une analyse par apprentissage automatique ou intelligence artificielle de l'entrée sensorielle (140).

4. Procédé (100) selon l'une quelconque des revendications 1 à 3, dans lequel l'action d'identification (300) implique l'identification de signatures (150) en comparant des signatures normales (152) ou des signatures pré-calibrées (154) d'entrée sensorielle (140) avec des signatures mesurées (150) de l'entrée sensorielle (140).

5. Procédé (100) selon l'une quelconque ou plusieurs des revendications 1 à 4, dans lequel l'action d'identification (300) est effectuée en marquant les signatures identifiées (100) établies par un instrument externe.

6. Procédé (100) selon l'une quelconque ou plusieurs des revendications 1 à 5, dans lequel l'action de mesure (200) est effectuée en utilisant lesdits accéléromètres comme des capteurs de vibrations (50) agencés dans une ou plusieurs pales (22) du générateur d'éolienne (12).

7. Procédé (100) selon l'une quelconque ou plusieurs des revendications 1 à 6, dans lequel l'action de mesure (200) est effectuée à l'aide d'un capteur acoustique (60).

8. Procédé (100) selon l'une quelconque ou plusieurs des revendications 1 à 7, dans lequel l' action de mesure (200) est basée sur des données sensorielles horodatées (34) et synchronisées (31) .

9. Procédé (100) selon l'une quelconque ou plusieurs des revendications 1 à 8, dans lequel l'action d'identification (300) est effectuée localement en rapport avec la mesure (200) de l'entrée sensorielle (140).

10. Procédé (100) selon l'une quelconque ou plusieurs des revendications 1 à 9, dans lequel l'action d'identification (300) des signatures (150) est effectuée au moyen d'une intelligence artificielle ou d'un apprentissage automatique (ML) alimenté par une entrée sensorielle (140) fournie par lesdits accéléromètres en tant que capteurs de vibrations (50) et éventuellement par un ou plusieurs capteurs acoustiques (60) situés dans une ou plusieurs pales (22) du générateur d'éolienne (12).

11. Procédé de fonctionnement (500) d'un générateur d'éolienne (12) par une action de commande (600) du générateur d'éolienne (12) en fonction de la pluie forte (164) ou de la grêle détectée selon les procédés (100) selon l'une quelconque ou plusieurs des revendications 1 à 10.

12. Procédé (500) selon la revendication 11, dans lequel l'action de commande (600) implique au moins la diminution de la vitesse de rotation (610) en dessous d'une certaine limite (612), ou le tangage (620) des une ou plusieurs pales, ou le lacet (630) de la nacelle lors de pluies fortes (164) ou de grêle.

13. Procédé (500) selon la revendication 12, dans lequel l'action de commande (600) est effectuée temporairement pendant la pluie forte ou la grêle détectée et à un niveau de génération d'énergie inférieur.

14. Procédé (500) selon l'une quelconque des revendications 12 ou 13, dans lequel la vitesse de rotation est temporairement réduite pour réduire la vitesse de pointe en dessous d'une vitesse de 200 km/h.

15. Système de détection de pluie forte (164) ou de grêle sur une pale (22) d'un générateur d'éolienne (12),
le système comprenant
- un moyen sensoriel (41) fournissant une entrée sensorielle (140) indiquant des vibrations ;
- un moyen adapté pour exécuter les actions selon le procédé (100) selon l'une quelconque ou plusieurs des revendications 1 à 10.

16. Système de fonctionnement d'un générateur d'éolienne (90), comprenant :
- le système selon la revendication 15 ;
- un moyen de commande du générateur d'éolienne (12) en fonction de la pluie forte (164) ou de la grêle détectée sur la pale (22) ;
- un moyen adapté pour exécuter les actions du procédé selon l'une quelconque ou plusieurs des revendications 1 à 14.
